# EUROPEAN PATENT SPECIFICATION

(11) **EP 1 928 255 B1**
(45) Date of publication and mention of the grant of the patent: **18.10.2017**
(21) Application number: 06778555.0
(22) Date of filing: 31.08.2006
(51) Int. Cl.: A23C 9/146, A23C 9/18, B01D 15/36, A23C 13/14

(54) **METHOD FOR THE PRODUCTION OF MILK PRODUCTS, PRODUCTS THEREBY OBTAINED, AND USE THEREOF**
VERFAHREN ZUR HERSTELLUNG VON MILCHPRODUKTEN, DADURCH ERHALTENE PRODUKTE UND DEREN VERWENDUNG
PROCÉDÉ DE PRODUCTION DE PRODUITS LAITIERS, PRODUITS AINSI OBTENUS ET LEUR UTILISATION

(30) Priority: 02.09.2005 FI 20055470
(43) Date of publication of application: 11.06.2008
(73) Proprietor: Valio Ltd., 00370 Helsinki (FI)
(72) Inventor: MANNER, Liisa, FI-01280 Vantaa (FI); TOSSAVAINEN, Olli, FI-02620 Espoo (FI); HUUMONEN, Juha, FI-00670 Helsinki (FI); SAHLSTEIN, Janne, FI-02760 Espoo (FI)
(74) Representative: Kolster Oy Ab
(86) International application number: PCT/FI2006/050372
(87) International publication number: WO 2007/026053

(56) References cited:
- EP-A1- 0 610 649
- EP-A1- 0 711 504
- WO-A1-01/41578
- WO-A1-94/21129
- WO-A1-2005/009138
- WO-A1-2005/013710
- GB-A- 654 384
- GB-A- 804 647
- GB-A- 992 758
- JP-A- 63 188 346
- NL-A- 7 209 352
- US-A- 4 096 287
- US-A- 4 450 182
- US-A- 5 576 040
- US-A1- 2005 170 062
- RANJITH H.M.P. ET AL.: 'Production of calcium-reduced milks using an ion-exchange resin' JOURNAL OF DAIRY RESEARCH vol. 66, 1999, pages 139 - 144, XP008077849
- O'SULLIVAN M.M. ET AL.: 'Effect of transglutaminase on the heat stability of milk: A possible mechanism' JOURNAL OF DAIRY SCIENCE vol. 85, no. 1, January 2002, pages 1 - 7, XP001102495

## Description

### FIELD OF THE INVENTION

The invention relates to a method for the production of low-calcium milk and low-calcium condensed milk or milk powder by using an ion exchange technique. The invention also relates to low-calcium products thus obtained. In addition, the invention relates to the use of the thus obtained products in various milk preparations for their stabilization and texturizing.

### BACKGROUND OF THE INVENTION

The problems from which the present invention was developed relate to the production of milk preparations, especially those used in cooking, such as cooking cream and coffee cream, and especially to their poor heat resistance during cooking and the preparation of coffee drinks. Common to milk products used in cooking is that they are added to hot food or coffee drinks, and the food is often further cooked and allowed to simmer for some time after this. However, high temperature or long-term heating easily cause coagulation of the cream proteins, i.e. the cream curdles, which ruins the outward appearance of the food or coffee. The phenomenon is emphasized the longer the milk preparation is stored. Thus, creams and other milk preparations are not as such optimally suitable for hot or heated foods. The poor heat resistance is thought to be caused for instance by the low protein content of the products, the calcium therein, and homogenization.

Heat resistance in milk preparations used in cooking and coffee drinks has generally been improved by increasing the milk protein content of the preparations and especially the content of the primary milk protein, casein. For this purpose, caseinates and, in particular, sodium caseinate, are used. Sodium caseinate is a protein preparation made of milk and having a protein content of over 80%. Sodium caseinate is generally prepared by separating casein from milk and converting it to sodium caseinate. A problem with this solution is that the process is long and complex, and the method produces as a by-product a poorly utilizable whey residue. In addition to process-technical drawbacks, one disadvantage of sodium caseinate is its price that has increased dramatically during the years, also resulting in higher production costs for cooking and coffee creams.

The casein content of cooking cream can also be increased by other means, simplest by using fat-free milk powder having a casein content of less than 30%. However, it has been found that fat-free milk powder as such does not function in the desired manner, i.e. improved heat resistance properties are not achieved.

Ion exchange resins have already been applied to the removal of minerals, such as calcium, magnesium, and potassium, from various liquids for several decades in different industrial fields. Ion exchange technique is typically applied to mineral enrichment and water softening, in which calcium is removed from water.

In dairy industry, ion exchange has been applied to the removal of minerals from whey, because the amount of minerals makes whey and whey preparations too salty and thus limits their use in foodstuffs. One such application is described in US patent 6,383,540 B1, Eurodia Industrie S.A. (published 7 May 2002). The publication describes a multi-step method for the removal of minerals from whey, in which whey is subjected to cation exchange and anion exchange treatment followed by electrodialysis or nanofiltering. Cation exchange is preferably performed with a weak cation exchange resin. The publication presents that cation exchange with a weak cation exchange resin containing carboxyl groups removes 60 to 65% of the bivalent cations, i.e. the calcium and magnesium ions, in whey. The weak cation exchange resin used in the method is in H⁺ form. The publication also discloses that the remaining bivalent cations are removed with a strong cation exchange resin. The method of this publication is a multi-step method in which calcium removal requires both a weak cation exchanger and a strong cation exchanger.

An ion exchange technique has also been applied to milk. Publication G. Oldham, "Ion Exchangers in the Dairy Industry," Dairyman, August 1952, vol. 69, pages 465 to 466 and 479 discloses generally the use of ion exchange in treating milk and milk products. The publication discloses for instance an ion exchange treatment of milk to remove calcium for the purpose of reducing the curdling properties of milk while keeping the nutritional value of milk, i.e. a certain calcium and phosphor content and calcium to phosphor ratio and other properties (colour, taste, fat content, etc.) of milk for consumer use. The publication states that ion exchange removes approximately 20% of calcium and phosphor in milk. The publication also describes the stabilization of milk powder for sterilization in particular by using ion exchange. For instance, the following are given as useful ion exchange materials for milk and milk products: sodium-aluminium-silicate resins, synthetic phenol-formaldehyde-type resins (Amberlite), and polystyrene-based resins (Zeo-Karb 225). In these ion exchange methods, the calcium removal efficiency has been very low.

A strongly acidic cation exchange resin, i.e. strong cation exchange resin, has also been used to remove calcium from milk. A problem with this solution is that a strong cation exchange resin not only binds bivalent cations, such as calcium, but also cations of other valency, such as sodium and potassium, which is not desirable. A disadvantage of a strong cation exchange resin is also its poor calcium removal efficiency (40 to 60% on average) and low capacity, whereby essentially some calcium still remains in the product. Therefore, milk treated with a strong cation exchange resin does not work in the desired manner in replacing sodium caseinate, for instance, in preparations intended for cooking.

WO 2005/013710 A1 discloses a process for producing a protein composition having a high percentage of the whey protein, wherein a dairy stream is treated with transglutaminase. US 4096287 discloses powdered skim milk for improving the flavor, texture and eye appeal of fluid milk products.

### BRIEF DESCRIPTION OF THE INVENTION

It is an object of the invention to develop a method so as to reduce or eliminate the above-mentioned problems and drawbacks. The object of the invention is achieved by a method characterised by what is stated in the independent claims. Preferred embodiments of the invention are disclosed in the dependent claims.

The invention is based on the unexpected observation that milk calcium can efficiently be removed with an ion exchange technique by using a weak cation exchange resin regenerated in Na or K form. Another unexpected observation was that sodium caseinate used conventionally in the preparation of cooking cream and coffee cream can be replaced with a low-calcium milk powder preparation made from low-calcium milk obtained in accordance with the invention. This is unexpected, because the casein content of the milk powder preparation of the invention is only about a third of the corresponding content of sodium caseinate.

An advantage of the method of the present invention is that calcium can be removed from milk in an economic manner essentially completely while other desired components of milk remain. The removal degree of calcium is over 80%, typically over 90%, preferably over 95% and even over 98%. The capacity of a weak cation exchange resin, i.e. the milk amount to be treated, is also considerably higher than that of a strong cation exchange resin; weak cation exchange resin can be used to treat even twice the amount of product in comparison with the same amount of a strong cation exchange resin. In addition, to regenerate a weak cation exchange resin requires only about half of the chemical amount required to regenerate a strong resin.

Another advantage of the method of the invention is that in the method no poorly utilizable by-products remain, as happens when preparing sodium caseinate, and the method is considerably simpler than the preparation method of sodium caseinate. In addition, milk casein is converted in the method of the invention in an economic manner into a more advantageous form, i.e. into salt-form caseinate. If a resin is regenerated into Na form, the method produces milk whose casein is in Na caseinate form, and if a resin is regenerated into K form, the method correspondingly produces milk in which casein is in K caseinate form. As stated above, caseinates improve heat resistance in milk products.

It was also observed that low-calcium milk powder obtained by the method of the invention is useful as a texturizing agent in sour milk products, such as yogurt, and thus generally affects their stability favourably.

### DEFINITIONS RELATED TO THE INVENTION

In connection with the present invention, the expression "low-calcium" refers to a milk product, such as milk, condensed milk, and milk powder, whose natural calcium content is typically reduced to a range of at most 0.3 percentage by weight, preferably at most 0.2 percentage by weight of the product's dry matter.

The expression "condensed milk" refers to a concentrated milk product made by removing liquid from milk and having a solids content of typically at least 20%, preferably 20 to 55%.

In this invention, the expression "milk preparation" refers to any liquid or semi-solid milk-based preparation. The fat portion of the milk preparation can be either milk fat or vegetable fat. Examples of such preparations are creams and imitation creams, cooking creams and coffee creams used typically in hot or heated foods and drinks, whose fat content is generally in the range of 3 to 20%. Products with a fat content of less than 3% also apply, even fat-free products. In connection with the present invention, a milk preparation can also be a sour milk product, such as yogurt, crème fraîche, sour milk, viili (ropy sour milk, a typical Finnish milk product), or curd. The fat content of these products may vary from 35 to 0%.

The expressions "cooking cream" and "coffee cream" refer to cream products made of milk, whose fat content is lower than regular cream and which is intended to be added in food during cooking or in coffee when making coffee drinks. The fat content of this type of cooking cream and coffee cream is generally in the range of 3 to 20%, typically 10 to 20 percentage by weight of the total weight of cream, but it may also be less than 3 percentage by weight, even fat-free.

The expression "crème fraîche" refers to soured cream or imitation cream with a fat content of approximately 5 to 35 percentage by weight, typically 10 to 30 percentage by weight. The product is also known as fraîche.

The expression "skimmed milk" refers to almost fat-free milk obtained by separation and having a fat content of at most 0.3 percentage by weight, preferably at most 0.1 percentage by weight of milk.

The expression "imitation cream" refers to cream whose fat is completely or partly replaced by vegetable fat. The product can thus also be made of skimmed milk and vegetable fat and possibly water.

The expression "weak cation exchanger" refers to a faintly acid cation exchanger.

The expression "recombination" in the examples of the present application refers to bringing a powdery milk product into liquid form by dissolving it in liquid, generally water, so as to obtain a mixture that in its dry matter content corresponds to the original solution, for example milk recombined from milk powder.

### DETAILED DESCRIPTION OF THE INVENTION

The invention relates to a method for removing calcium from milk to produce low-calcium milk, the method being characterised by subjecting the milk to ion exchange treatment with a weak cation exchange resin that is in the form of a univalent metal ion, and to an enzyme treatment with transglutaminase.

In the method of the invention, the weak cation exchange resin used is preferably in Na⁺ or K⁺ form.

The functional groups of the cation exchange resin are preferably carboxyl groups, but may also be sulphate or chloromethyl groups, for instance.

The base stock (carrier) of the cation exchange resin is organic matter, such as polyacryl polymer or polystyrene polymer to which functional groups, such as the above-mentioned carboxyl, sulphate or chloromethyl groups, are crosslinked. Polyacryl and polystyrene resins can be linked with a suitable crosslinking agent, such as divinylbenzene. One typical carrier resin that is useful in the method of the invention is polyacrylate resin or polyacryl-divinylbenzene copolymer resin.

The operation of the cation exchange resin is based on the fact that resin binds cations and frees H⁺ ions. The ion exchange capability of the weakly acidic or weak cation exchange resin used in the method of the present invention is based on the ability of functional groups, preferably carboxyl groups, to bind and release ions having the same charge according to the affinity order.

In this invention, it is possible to use any weak cation exchange resin, and there are several commercially available from different manufacturers. The resins may differ from each other in pore size, crosslink number, and ion exchange capacity. Typical properties for a weak cation exchanger used according to the invention are for instance the following:
Matrix: polyacrylate or polyacryl-divinylbenzene copolymer
Structure: macroporous
Functional group: carboxyl group COO⁻
Functional pH range: 5 to 14
Weight ("shipping weight"): 0.800 g/l in H⁺ form
Particle size: average diameter 0.4 to 0.6 mm
Water retention capacity: 40 to 56%
Ion form: Na⁺ or K⁺

An especially preferred way is to use an acrylate/divinylbenzene copolymer-based weak cation exchange resin that contains carboxyl groups as its functional groups and is in Na⁺ or K⁺ form.

In practice, the method of the invention is implemented in such a manner that the milk to be treated is run through a column containing a weak cation exchange resin in Na⁺ or K⁺ form and the low-calcium milk exiting the column is collected. The run is continued as long as there is ion exchange capacity left.

The method of the invention preferably has as a pre-phase resin regeneration using two-phase regeneration, whereby in the first phase, the resin is regenerated with acid, and in the second phase, with base. The acid used in the regeneration is typically HCl or HNO₃, and the base is NaOH or KOH, preferably NaOH.

In practice, the regeneration is performed as follows: the resin is packed in a column. It is regenerated first with an acid by directing an acid solution through the column. Then the column is flushed with water, and next, regeneration with a base is done by directing a base solution through the column. During the regeneration, the resin is typically moved and mixed with pressurized air. The required amounts of regeneration chemicals are calculated from the amount of resin, the regeneration coefficient, molar mass and content of the regeneration chemical; in practice, this is a stoichiometric amount multiplied by the regeneration coefficient.

Both the cation exchange treatment and the regeneration are typically done at a temperature of less than +15°C.

The regeneration preferably uses an NaOH solution as the base solution.

The raw material used in the method of the invention is preferably skimmed milk. The calcium content of skimmed milk is generally in the range of 0.11 to 0.13 percentage by weight, typically approximately 0.12 percentage by weight of milk (1.17 to 1.33 percentage by weight, typically 1.25 percentage by weight of dry matter of milk). In milk, calcium is present as phosphates, citrates, and carbonates.

The method of the invention produces low-calcium milk having a calcium content of at most 0.03 percentage by weight, preferably at most 0.02 percentage by weight of milk (at most 0.3 percentage by weight, preferably at most 0.20 percentage by weight of dry matter of milk). With the method of the invention, the calcium content of milk can be reduced in such a manner that the calcium content of the produced low-calcium milk is at most 20 percentage by weight, preferably at most 10 percentage by weight, and especially preferably at most 5 percentage by weight of the calcium content of the milk used as the starting material.

The invention also relates to milk obtained with the method.

In addition, the invention relates to a method for the production of low-calcium condensed milk or milk powder by using as the starting material in the method low-calcium milk produced with the method described above. The condensed milk and milk powder are produced by evaporating and drying the low-calcium milk produced according to the invention.

An embodiment of the invention for the production of low-calcium milk, condensed milk, or milk powder takes into consideration that the pH of the cation-exchanged milk obtained according to the invention is higher than the pH of ordinary milk. Because neutralised milk is easier to dry, the pH of the milk is adjusted close to neutral (for instance 6.5 to 7.5) with a suitable weak acid, such as citric acid (for instance 5-% citric acid). Neutralisation also improves the utilisation properties of the cation-exchanged milk in other products.

The invention thus also relates to a method for the production of low-calcium condensed milk and milk powder, which comprises the following steps:
a) producing low-calcium milk with the method of the invention described above,
b) adjusting the pH of the low-calcium milk with a weak acid to the value of 6.5 to 7.5,
c) pasteurising the milk,
d) evaporating the pasteurised milk to a solids content of approximately 20 to 55% to obtain condensed milk, and
e1) recovering the condensed milk, whereby low-calcium condensed milk is obtained, or
e2) drying the condensed milk, whereby low-calcium milk powder is obtained.

The weak acid used in step b can be citric acid, for instance. The pasteurisation in step c is performed under conventional conditions in a conventional manner per se. The drying in step e2 is typically performed by spray drying in a manner known per se.

With the cation exchange treatment of the invention, it is possible to remove at least 80%, preferably at least 90%, and especially preferably at least 95% of the calcium in milk. Ordinary milk powder made from skimmed milk contains approximately 11,200 to 12,800 mg/kg (1.17 to 1.33 percentage by weight of the dry matter of milk) calcium. As an example, it can be noted that when this type of milk was treated according to the invention with a weak cation exchanger and further processed into milk powder, the calcium content of the obtained milk powder was 390 mg/kg. Thus, more than 95% of calcium could be removed. For comparison, it can also be noted that the calcium content of milk powder made from corresponding milk treated with a strong cation exchanger was 6,200 mg/kg. It was thus possible to remove only approximately 50% of the calcium with a strong cation exchange resin. The good removal degree of calcium by using a weak cation exchanger is also shown in examples 1 and 2 presented later herein.

The invention also relates to thus obtained condensed milk and milk powder.

The calcium content of condensed milk produced with the method of the invention is at most 0.3 percentage by weight, preferably at most 0.2 percentage by weight of the dry matter of condensed milk.

The calcium content of milk powder produced with the method of the invention is at most 0.3 percentage by weight, preferably at most 0.2 percentage by weight, and especially preferably at most 0.1 percentage by weight of the dry matter of milk powder.

According to the present invention, the properties of the cation exchanged or low-calcium milk, low-calcium condensed milk, and especially low-calcium milk powder as texturizing agents in milk preparations can be further improved by treating the milk, condensed milk, or milk powder with transglutaminase. The use of transglutaminase in treating cation exchanged milk provides a better advantage than in treating regular milk, when producing milk powder. Transglutaminase forms crosslinks between lysine and glutamine aminoacids. The enzyme forms especially good crosslinks in milk treated with a weak cation exchange resin. The enzyme treatment improves the thickening properties of milk powder in yogurts, for instance.

The enzyme treatment can be performed after the cation exchange treatment before pH control in step b or to the finished milk powder after step e1.

In the method of the invention, the transglutaminase enzyme amount may be for instance 0.1 to 500 U/g milk powder or milk dry matter.

According to one aspect, the present invention also relates to low-calcium milk, condensed milk, or milk powder having a calcium content of at most 0.3% of the dry matter of the milk, condensed milk, or milk, powder, respectively, and which is treated with transglutaminase. According to an embodiment, the pH of low-calcium milk or condensed milk used to produce this type of milk, condensed milk, or milk powder is adjusted to 6.5 to 7.5 with a weak acid, such as citric acid. The calcium content of low-calcium milk, condensed milk, or milk powder of the invention is preferably at most 0.2% of the dry matter of milk, condensed milk, or milk powder. The low-calcium milk, condensed milk, or milk powder of the invention is preferably produced with the method of the invention described above.

In addition, it has been found according to the invention that low-calcium milk, or low-calcium condensed milk or milk powder made from it can be used in the manner of sodium caseinate as a stabilising agent in milk preparations intended for use in cooking or for adding to coffee drinks to improve their heat resistance. Said products can also be used as texturizing agents for milk preparations. In certain milk products, such as typically in yogurts, it may be desirable to have a thick consistency. The following examples show that low-calcium milk powder can well be used as a thickening agent in the preparation of yogurt.

The invention thus also relates to the use of low-calcium milk, condensed milk, or milk powder, which have a calcium content of at most 0.3 percentage of dry weight, of the invention or prepared by a method of the invention as a stabilising agent and/or texturizing agent in milk preparations. A milk, preparation is typically a milk-based preparation used in hot or heated foods, for instance coffee cream, cooking cream, or crème fraîche, or imitation cream or a sour milk product, such as yogurt, sour milk, viili, or curd. This is surprising, since the casein content of the milk powder of the invention is only about a third of the casein content of sodium caseinate, and even the total protein content is less than half of the corresponding content of sodium caseinate at the same dosage.

According to the invention it is possible to use approximately 5 to 50% low-calcium milk, approximately 1 to 25% (depending on the dry matter of the condensed milk) low-calcium condensed milk, and approximately 0.5 to 5%, preferably 1 to 3% low-calcium milk powder of the weight of a milk preparation used for cooking.

The following examples illustrate the invention.

### EXAMPLES

The following examples describe the production of low-calcium milk and milk powder (Comparative examples 1 to 4) and the use of milk powder in coffee cream and cooking cream (Comparative examples 5 to 7). The examples show that low-calcium milk powder increases and in some cases even improves the heat resistance of milk preparations in the manner of sodium caseinate, and that it is well suited for the stabilisation and as texturizing agent of milk preparations.

Example 8a describes the preparation of an enzyme-treated (transglutamase-treated) milk powder.

Examples 8 and 9 describe the effect of the transglutaminase enzyme on low-calcium milk powder. The examples show that the favourable effect of transglutaminase on the properties of milk powder is especially noticeable in low-calcium milk powder.

The examples used as the weak cation exchange resin Relite NEXC05 resin (manufacturer Mitsubishi Chemical Co.) that has the following properties:
Matrix: porous acrylate/divinylbenzene (DVB) copolymer
Functional group: carboxyl acid
Particle size: 0.425 +/- 1.18 mm
Weight ("shipping weight"): 0.800 g/l (H⁺ form)
Physical state: light yellow, transparent, spherical particles
Water retention capacity: 43 to 56%
Ion form: H⁺ or Na⁺
Ion exchange capacity: min. 4.4 equivalents/I

### EXAMPLE 1A (resin regeneration)

First phase of regeneration: A 5-percent acid solution (hydrochloric acid) was fed from below into an ion exchange column through resin and removed from top. Flow rate was adjusted to be suitable relative to the amount of resin, for instance 5 BV/h (BV = bed volume, amount of resin in litres). During regeneration, the resin was moved and mixed by means of pressurised air. When the entire acid amount had been fed into the column, the resin was flushed with water from bottom or top. The amount of water was adjusted so that any extra acid was removed from the column. The resin was mixed with pressurised air also after the flushing.

Second phase of regeneration: A 3-percent base solution (sodium hydroxide or potassium hydroxide) was fed from below into an ion exchange column and removed from top. The process was similar to the acid regeneration. After the base, the resin was flushed so that the conductivity of the exiting water was at most 0.7 mS/cm. After this, the resin was ready for ion exchange. The level of the resin was controlled so that it was never above the liquid level.

### COMPARATIVE EXAMPLE 1

Fat-free, cold (under +6°C) milk with a calcium content of approximately 0.13% was fed from the top into a column packed with Relite NEXC05 resin regenerated into Na⁺-form in the manner described above. The run rate was 5 to 8 BV/h, for instance. Initially, the exiting milk was mixed with the water in the column and was not recovered until the dry matter content of the exit flow was high enough (over 6%), at which time the milk was collected into a container. The run was continued as long as the resin had any ion exchange capacity, i.e. at least 40 x resin volume (BV). The calcium content of the exiting milk was monitored as necessary with calcium tittering (the low limit was set at 0.05% calcium, for instance, at which time the run was stopped). After the run, the resin was flushed with water and the cation-exchanged milk was removed from the column. The resin was regenerated for the next use as described above.

The results of calcium removal from fat-free milk are shown in table 1. The batch in the test was 25,000 litres of fat-free milk. The results show that it was possible to remove calcium completely from the fat-free milk up till a column volume of 17.5.

**Table 1**

| BV | Ca (% of milk weight | Ca (% of milk dry matter) | pH |
|---|---|---|---|
| 0 | 0.1323 | 1.4 | 6.68 |
| 3.5 | 0 | 0 | 8.15 |
| 7 | 0 | 0 | 8.07 |
| 10.5 | 0 | 0 | 8 |
| 14 | 0 | 0 | 7.95 |
| 17.5 | 0 | 0 | 7.88 |
| 21 | 0.0024 | 0.026 | 7.76 |
| 24.5 | 0.0048 | 0.052 | 7.64 |

### COMPARATIVE EXAMPLE 2

From fat-free milk with a calcium content of approximately 0.13%, calcium was removed as described in example 1, except that the batch was 28,000 litres of milk and the pH of the obtained cation-exchanged milk was adjusted as the milk exited the column. The final pH of the entire batch was 6.8. The results are shown in table 2. The results show that it was possible to remove calcium completely from the fat-free milk up till a column volume of 34.8.

**Table 2**

| BV | Ca (% of milk weight | Ca (% of milk dry matter) | pH |
|---|---|---|---|
| 2.9 | 0 | 0 | 9.28 |
| 5.8 | 0 | 0 | 7.08 |
| 8.7 | 0 | 0 | 7.37 |
| 11.6 | 0 | 0 | 6.7 |
| 14.5 | 0 | 0 | 6.82 |
| 17.4 | 0 | 0 | 6.83 |
| 20.3 | 0 | 0 | 7.11 |
| 23.2 | 0 | 0 | 6.82 |
| 26.1 | 0 | 0 | 6.67 |
| 29 | 0 | 0 | 6.81 |
| 31.9 | 0 | 0 | 8.03 |
| 34.8 | 0 | 0 | 7.97 |
| 37.7 | 0.0016 | 0.017 | 8 |
| 40.6 | 0.0104 | 0.113 | 7.84 |
| 43.5 | 0.0216 | 0.234 | 7.68 |
| 46.4 | 0.028 | 0.304 | 7.6 |

### COMPARATIVE EXAMPLE 3

Milk powder was prepared from the cation-exchanged, low-calcium fat-free milk prepared in example 1. The pH of the milk, which was 7.2, was adjusted first with 2-percent citric acid to 7.0 at 10°C. The neutralised fat-free milk was pasteurised (80°C/30 s) and evaporated to a dry matter level of 35 to 36%. After this, the concentrate was dried with spray drying like regular milk powder. The pH of the finished powder in a 10-percent solution was 7.1 and its Ca content 0.04% of the dry matter of the milk powder.

### COMPARATIVE EXAMPLE 4

Milk powder was prepared from the cation-exchanged, low-calcium fat-free milk prepared in example 2 by pasteurising (80°C/30 s) the milk and evaporating it to a dry matter level of 33%. After this, the concentrate was dried with spray drying like regular milk powder. The pH of the finished powder in a 10-percent solution was 6.9 and its Ca content 0.07% of the dry matter of the milk powder.

### COMPARATIVE EXAMPLE 5

The suitability of the low-calcium milk powder was tested in the preparation of coffee cream. Five 20-litre batches of coffee cream were prepared and treated in small-scale process equipment. The fat content of the cream was adjusted so that the final fat content of each batch was 10%. Commercial sodium caseinate was added into one batch. Different amounts of recombined low-calcium milk powder of the invention were added into the other batches in such a manner, however, that the protein content of the product was standardised with regular fat-free milk powder with a calcium content of 1.3% of the dry matter of the milk powder.

The products were UHT-treated at 140°C/3 s, at which time an aseptic two-phase homogenisation 20/5 MPa was performed. Aseptic samples were taken from the batches into bottles. The compositions of the products were as follows:
Batch A: 1.8% sodium caseinate, rest cream (comparison)
Batch B: 2.6% low-calcium milk powder, 15.4% water, rest cream
Batch C: 2.08% low-calcium milk powder and 0.52% fat-free milk powder, 15.4% water, rest cream
Batch D: 1.56% low-calcium milk powder and 1.04% fat-free milk powder, 15.4% water, rest cream
Batch E: 1.04% low-calcium milk powder and 1.56% fat-free milk powder, 15.4% water, rest cream.

The low-calcium milk powder used in batches B to E was prepared according to Comparative example 3 and its calcium content was 0.04% of the dry matter of milk powder.

In a coffee test, 10 ml of fresh coffee drink was heated to a desired temperature. 1 ml of cream was added to the coffee and mixed rapidly. The cream coffee was examined visually to see whether the cream thickened in the coffee or not. The result of the coffee test was given at the highest temperature in which the cream had not yet thickened. The coffee test was performed on the samples at 2 days, 1 month and 3 months. The results of the coffee test are shown in table 3.

**Table 3**

| | 2 days | 1 month | 3 months |
|---|---|---|---|
| Batch A | 99°C | 98°C | --* |
| Batch B | 98°C | 94°C | 96°C |
| Batch C | 94°C | 90°C | 94°C |
| Batch D | 92°C | 90°C | 94°C |
| Batch E | 90°C | 88°C | 90°C |

| | | | |
|---|---|---|---|
| * Sample ruined by microbiological contamination | | | |

In normal production, a sufficient result of a coffee test is 85°C. When developing a product and process, the result must, however, be better than this, preferably at least 90°C so as to obtain an acceptable result in production with sufficient probability within the normal variations of process parameters.

The performed test series clearly shows how the low-calcium milk powder can provide nearly the same coffee resistance as with sodium caseinate (batch A). It also shows that by using at least 1.56% of low-calcium milk powder (batch D), a sufficient coffee resistance is achieved in practice. In addition, it clearly shows that regular fat-free milk powder as such is not enough to replace sodium caseinate, because coffee resistance decreases evenly as the amount of low-calcium milk powder decreases and the amount of fat-free milk powder increases (batches B to E).

### COMPARATIVE EXAMPLE 6

Coffee cream was prepared with an apparatus of a normal production scale and the product compositions of batches A (comparison) and C described in Comparative example 5. The size of the prepared batches was 2,000 kg. The formula and process were as in example 5 except that the product was packed in 2 dl aseptic Tetra Brik packages. The coffee resistance of the batches was tested with the coffee test until the age of 17 weeks. The results are shown in table 4.

**Table 4**

| | 2 days | 2 wks | 4 wks | 6 wks | 9 wks | 15 wks | 17 wks |
|---|---|---|---|---|---|---|---|
| Batch A (Na cas.) | --* | 92°C | 92°C | 92°C | 92°C | 90°C | 86°C |
| Batch C (cx powder) | 94°C | 94°C | 94°C | 94°C | 92°C | 92°C | 90°C |

| | | | | | | | |
|---|---|---|---|---|---|---|---|
| * Result is missing | | | | | | | |

According to the results, sodium caseinate could be replaced with a nearly corresponding amount of low-calcium milk powder. Because the entire amount of fat-free milk powder and part of the low-calcium milk powder was used in water recombination, the actual added amount is even smaller than this. Coffee resistance was equally good, even better than when using sodium caseinate.

### COMPARATIVE EXAMPLE 7

Two batches of cooking cream (fat content 15%) were prepared with an apparatus of a normal production scale, and 1.5% of commercial sodium caseinate was added to batch A, and 1.5% of low-calcium milk powder made according to example 4 and having a calcium content of 0.05% of the dry matter of the milk powder was added to batch B. The size of the prepared batches was 3,000 kg. With the exception of said substances, the formulas were identical (ingredients included cream, sodium citrate, guar gum, modified starch, recombined milk, and water). The preparation processes were also identical and comprised dissolution, UHT treatment (140°C/3 s), and homogenisation (180/40 bar) of the powders. The products were packed in 2 dl aseptic Tetra Brik packages. The amount of separating whey of the batches and their cooking resistance was evaluated until the age of 17 weeks.

The amount of separated whey was measured by weighing. The following results were obtained:

**Table 5. Amount of separated whey in grams**

| | Batch A (Comparison) | Batch B |
|---|---|---|
| 3 wks | 0.8 | 0.1 |
| 4 wks | 1.3 | 0.1 |
| 8 wks | 4.3 | 0.3 |
| 9 wks | 4.5 | 0.3 |
| 10 wks | 4.6 | 0.2 |
| 12 wks | 7.0 | 1.0 |
| 13 wks | 6.0 | 0.7 |
| 15 wks | 8.5 | 1.0 |
| 17 wks | 9.0 | 1.5 |

Because the separated whey is measured each time from a new package, the package-related differences are revealed, in which case the amount of bottom whey may also seem to decrease. According to the result, the separation of whey to the bottom of the package remained well under control when using low-calcium milk powder and was less than when using sodium caseinate.

Cooking resistance was measured by placing two marinated broiler fillets and 200 g cooking cream in an oven casserole. The food was cooked in the oven at 200°C for one hour. After this, the texture of the cream was evaluated organoleptically. Special attention was paid to whether the cream remained homogenous or had flaked or thickened. The test was very severe; a satisfactory result in the oven broiler test usually means that the cream also works well in almost all other foods. The following results were obtained:

**Table 6. Cooking resistance**

| | Batch A (Comparison) | Batch B |
|---|---|---|
| 9 wks | Homogenous, slightly flaky | Homogenous, slightly flaky |
| 17 wks | Homogenous, a few small flakes | Homogenous, a few small flakes |

Cooking resistance was not tested when fresh, because problems usually arise only after long-term storage. The heating resistance of cooking cream prepared with low-calcium milk powder is as good as when sodium caseinate is used.

### EXAMPLE 8A

Ordinary medium heat milk powder and low-calcium cation exchanged milk powder were recombined into an 11-percent solution in 40°C cation exchanged water. The low-calcium milk powder was prepared according to Comparative example 3, and its calcium content was 0.04% of the dry matter of the milk powder. The calcium content of the medium heat milk powder was 1.25% of the dry matter of the milk powder. Dissolution was enhanced with a magnet mixer and a rod mixer. 2,000 g of solution was made of both milk powders. When the powders had dissolved, the solutions were divided into two 1,000 g portions. Into one portion, 40 U/I of transglutaminase enzyme (TG-YG, activity 100 U/g, Ajinomoto, Japan) was added, whereby the transglutaminase dosage per powder was 350 U/kg of milk powder. Enzyme activity was determined with a hydroxamate process described in publication Folk, J.E. & Cole, P.W., Mechanism of Action of Guinea Pig Liver Transglutamanase, J. Biol. Chem., 241 (1966) 5518 to 5525.

The thus obtained solutions were mixed, and after mixing, the enzyme was allowed to work without mixing for two hours at 40°C.After this, each solution was heated to 72°C while mixing, and cooled to below 10°C, whereby the transglutaminase enzyme became inactive. All four solutions were freeze- dried, ground into powder and used in yogurt tests according to the following examples 8 and 9.

### EXAMPLE 8

The example describes the increase in thickness of fat-free yogurt with different milk powders.

Into 1,960 g of fat-free milk, 40 g of fat-free milk powder (2%) was added, the fat-free milk powder being either normal medium heat milk powder (mp) (Ca content 1.25% of the dry matter of the milk powder), cation-exchanged milk powder (cx mp) (Ca content 0.02% of the dry matter of the milk powder), transglutaminase-treated fat-free milk powder (TG mp) (Ca content 1.25% of the dry matter of the milk powder), or transglutaminase-treated cation-exchanged milk powder of the invention (TG cx mp) (Ca content 0.02% of the dry matter of the milk powder). All powders were freeze-dried. The powder was dissolved in milk at approximately 40°C. After this, the milk was heated to 93°C for 10 minutes and cooled to 42°C. As souring agent, 60 g of unflavoured yogurt was added. The milk was let to sour at 42°C for approximately 5 hours, during which time the pH decreased to 4.5. The yogurt was cooled in a water bath to below 10°C while carefully mixing. The yogurts were stored at +5°C for three weeks. The measurements and evaluations were made once a week.

**Table 7. Yogurt viscosities (Pa s) during storage**

| Time (day) | Comparison=mp | TG mp | TG cx mp | Cx mp |
|---|---|---|---|---|
| 1 | 1.291 | 1.364 | 1.720 | 1.248 |
| 8 | 1.572 | 1.582 | 1.956 | 1.482 |
| 14 | 1,521 | 1.687 | 2.055 | 1.642 |

The results show that the transglutaminase-treated cation-exchanged milk powder of the invention provided the thickest texture and highest viscosity for the yogurt. In texture, all yogurts were smooth and they had a pleasant taste. The pHs of the yogurts are shown in table 2.

**Table 8. Yogurt pHs during storage at 5°C**

| Time (day) | Comparison=mp | TG mp | TG cx mp | Cx mp |
|---|---|---|---|---|
| 0 | 4.54 | 4.56 | 4.50 | 4.53 |
| 1 | 4.37 | 4.41 | 4.32 | 4.36 |
| 8 | 4.22 | 4.25 | 4.24 | 4.2 |
| 14 | 4.17 | 4.18 | 4.14 | 4.17 |

The results show that all yogurts soured very evenly.

In addition, the separation of whey from the yogurt was monitored during storage (table 9).

**Table 9. Separation of whey in the yogurts during storage**

| Time (day) | Comparison=mp | TG mp | TG cx mp | Cx mp |
|---|---|---|---|---|
| 1 | No whey | No whey | No whey | No whey |
| 8 | Whey | Some whey | Very little whey | Whey |
| 14 | Whey | A little whey | No Whey | Very little whey |

The separation of whey during storage was the least when using the transglutaminase-treated cation-exchanged milk powder of the invention (TG cx mp). The second least whey was separated when using the cation-exchanged milk powder (cx mp).

### EXAMPLE 9

The example describes the preparation of yogurt entirely with milk powder in such a manner that 20% of the powder is replaced with various milk powders.

The yogurts were made as in example 8, but the milk was prepared from medium heat milk powder by recombination, whereby 178 g milk powder was dissolved at 40°C in 1,740 g of water. Into the thus obtained recombined milk, 44 g (20% of the entire powder amount) of either normal medium heat milk powder (mp), cation-exchanged milk powder (cx mp), transglutaminase-treated fat-free milk powder (TG mp), or transglutaminase-treated cation-exchanged milk powder of the invention (TG cx mp) were added. The calcium contents of these were the same as given in example 8. After the powder had dissolved, the mixture was heat-treated and cooled as in example 8. As souring agent, 60 g of unflavoured yogurt were added and the yogurt was prepared as in example 8. The samples were stored at +5°C for three weeks. The viscosity results are shown in table 10.

**Table 10. The viscosities (Pa s) of yogurts made from powder during storage**

| Time (day) | Comparison=mp | TG mp | TG cx mp | Cx mp |
|---|---|---|---|---|
| 1 | 1.152 | 1.290 | 1.926 | 1.795 |
| 7 | 1.335 | 1.422 | 1.914 | 1.923 |
| 12 | 1.280 | 1.338 | 1.750 | 1.603 |
| 21 | 1.589 | 1.668 | 2.248 | 2.103 |

The pHs of yogurts during storage are shown in table 11.

**Table 11. The pHs of yogurts made from powder during storage at 5°C**

| Time (day) | Comparison=mp | TG mp | TG cx mp | Cx mp |
|---|---|---|---|---|
| 0 | 4.62 | 4.59 | 4.64 | 4.62 |
| 1 | 4.54 | 4.47 | 4.45 | 4.46 |
| 7 | 4.37 | 4.30 | 4.30 | 4.32 |
| 12 | 4.33 | 4.27 | 4.25 | 4.29 |
| 21 | 4.31 | 4.23 | 4.23 | 4.24 |

When preparing yogurt from powder, the whey separation of the product is a special risk. This was monitored during storage by evaluating the amount of whey collected on top of the yogurt. The results are in table 12.

**Table 12. The separation of whey in yogurt during storage**

| Time (day) | Comparison=mp | TG mp | TG cx mp | Cx mp |
|---|---|---|---|---|
| 7 | Whey | Whey | No whey | A little whey |
| 12 | Whey | A little whey | Very little whey | A little whey |
| 18 | Whey | Whey | No whey | Whey |

The results show that when making yogurt from milk powder, the thickest texture was obtained using 20% replacement with transglutaminase-treated cation-exchanged milk powder of the invention (TG cx mp). A nearly equal viscosity was obtained with the cation-exchanged milk powder of the invention (cx mp). In the test, all yogurts soured very similarly. The least separation of whey during storage was when using the transglutaminase-treated cation-exchanged milk powder of the invention (TG cx mp) as the replacement substance. The second least whey was separated when using the cation-exchanged milk powder (cx mp).

## Claims

1. A method for removing calcium from milk for the production of low-calcium milk, **characterised in that** the milk is subjected to ion exchange treatment with a weak cation exchange resin in the form of a univalent metal ion, and to an enzyme treatment with transglutaminase.

2. A method as claimed in claim 1, **characterised in that** the cation exchange resin is in Na⁺ or K⁺ form, preferably in Na⁺ form.

3. A method as claimed in any one of the preceding claims, **characterised in that** the functional group of the cation exchange resin is a carboxyl group.

4. A method as claimed in any one of the preceding claims, **characterised in that** the cation exchange resin is an acrylate/divinylbenzene copolymer-based resin.

5. A method as claimed in any one of the preceding claims, **characterised in that** the method comprises resin regeneration by using two-phase regeneration, where in the first phase, the resin is regenerated with acid and in the second phase with base.

6. A method as claimed in claim 5, **characterised in that** the acid is HCl or HNO₃, and the base is NaOH or KOH, preferably NaOH.

7. A method as claimed in any one of the preceding claims, **characterised in that** the starting material of the method is skimmed milk.

8. A method as claimed in any one of the preceding claims, **characterised in that** the obtained product is low-calcium milk with a calcium content of at most 20%, preferably at most 10% and particularly preferably at most 5% of the calcium in the milk used as starting material.

9. A method as claimed in any one of the preceding claims, **characterised in that** the calcium content of the produced low-calcium milk is at most 0.3 percentage by weight, preferably at most 0.2 percentage by weight of the dry matter of the milk.

10. A method as claimed in any one of the preceding claims, **characterised in that** the pH of the obtained low-calcium milk is adjusted with a weak acid to the value of approximately 6.5 to 7.5.

11. A method for the production of low-calcium condensed milk and milk powder, **characterised in that** a low-calcium milk prepared by a method of any one of claims 1 to 10 is used as a starting material.

12. A method as claimed in claim 11, **characterised by** the method comprising the steps of:
a) producing low-calcium milk with the method of any one of claims 1 to 10,
b) adjusting the pH of the low-calcium milk with a weak acid to the value of 6.5 to 7.5,
c) pasteurising the milk,
d) evaporating the pasteurised milk to a solids content of approximately 20 to 55% to obtain condensed milk, and
e1) recovering the condensed milk, whereby low-calcium condensed milk is obtained, or
e2) drying the condensed milk, whereby low-calcium milk powder is obtained.

13. A method as claimed in any one of the preceding claims, **characterised in that** the weak acid is citric acid.

14. A method as claimed in claim 12, **characterised in that** step e2 is performed by spray drying.

15. A method as claimed in claims 12 to 14, **characterised in that** the enzyme treatment is performed after step a or e1.

16. A method as claimed in any of the preceding claims, **characterised in that** the transglutaminase is added in an amount of 0.1 to 500 U/g of milk powder or milk dry matter.

17. A method as claimed in any one of claims 11 to 16, **characterised in that** the calcium content of the obtained condensed milk is at most 0.3 percentage by weight, preferably at most 0.2 percentage by weight of the dry matter of the condensed milk.

18. A method as claimed in any one of claims 11 to 16, **characterised in that** the calcium content of the obtained milk powder is at most 0.3 percentage by weight, preferably at most 0.2 percentage by weight of the dry matter of the milk powder.

19. Low-calcium milk, condensed milk or milk powder, **characterised in that** its calcium content is at most 0.3% of the dry matter of the milk, condensed milk or milk powder, respectively, and it is treated with transglutaminase enzyme.

20. Low-calcium milk, condensed milk or milk powder as claimed in claim 19, **characterised in that** the pH of the low-calcium milk or condensed milk used in the preparation of the low-calcium milk, condensed milk or milk powder is adjusted with a weak acid to the value of approximately 6.5 to 7.5.

21. Low-calcium milk, condensed milk or milk powder as claimed in claim 20, **characterised in that** the weak acid is citric acid.

22. Low-calcium milk, condensed milk or milk powder as claimed in any one of claims 19 to 21, **characterised in that** its calcium content is at most 0.2% of the dry matter of the milk, condensed milk or milk powder.

23. Low-calcium milk, condensed milk or milk powder as claimed in any one of claims 19 to 22, **characterised in that** it is prepared with a method as claimed in any one of claims 1 to 16.

24. A use of low-calcium milk, condensed milk or milk powder, which have a calcium content of at most 0.3 percentage of dry weight, as a stabilising agent and/or texturizing agent in a milk preparation, **characterised in that** the low-calcium milk, condensed milk or milk powder is prepared with a method as claimed in any one of claims 1 to 18, or that it is a product according to any one of claims 19 to 22.

25. The use as claimed in claim 24 as a texturizing agent in sour milk products, such as yogurt, sour milk, "viili" or curd.

26. The use as claimed in claim 24 as a stabilising agent in hot or heated foods, such as coffee cream, cooking cream or crème fraîche, or imitation cream.

27. The use as claimed in any one of claims 24 to 26, **characterised in that** approximately 5 to 50 percentage by weight low-calcium milk, approximately 1 to 25 percentage by weight low-calcium condensed milk, and approximately 0.5 to 5 percentage by weight, preferably 1 to 3 percentage by weight low-calcium milk powder is used of the weight of the milk preparation.

## Patentansprüche

1. Verfahren zur Entfernung von Calcium aus Milch zur Herstellung von calciumarmer Milch, **dadurch gekennzeichnet, dass** die Milch einer Ionenaustauschbehandlung mit einem schwachen Kationenaustauscherharz in Form eines einwertigen Metallions, und einer Enzymbehandlung mit Transglutaminase unterworfen wird.

2. Verfahren nach Anspruch 1, **dadurch gekennzeichnet, dass** das Kationenaustauscherharz in Na⁺ - oder K⁺ -Form vorliegt, vorzugsweise in Na⁺ - Form.

3. Verfahren nach einem der vorhergehenden Ansprüche, **dadurch gekennzeichnet, dass** die funktionelle Gruppe des Kationenaustauscherharzes eine Carboxylgruppe ist.

4. Verfahren nach einem der vorhergehenden Ansprüche, **dadurch gekennzeichnet, dass** das Kationenaustauscherharz ein Harz auf Acrylat/Divinylbenzol-Copolymer-Basis ist.

5. Verfahren nach einem der vorhergehenden Ansprüche, **dadurch gekennzeichnet, dass** das Verfahren die Harzregeneration unter Verwendung einer Zweiphasen-Regeneration umfasst, wobei in der ersten Phase das Harz mit Säure und in der zweiten Phase mit Base regeneriert wird.

6. Verfahren nach Anspruch 5, **dadurch gekennzeichnet, dass** die Säure HCl oder HNO₃ ist und die Base NaOH oder KOH, vorzugsweise NaOH ist.

7. Verfahren nach einem der vorhergehenden Ansprüche, **dadurch gekennzeichnet, dass** das Ausgangsmaterial des Verfahrens Magermilch ist.

8. Verfahren nach einem der vorhergehenden Ansprüche, **dadurch gekennzeichnet, dass** das erhaltene Produkt eine calciumarme Milch ist mit einem Calciumgehalt von höchstens 20 %, vorzugsweise höchstens 10 % und besonders bevorzugt höchstens 5 % des Calciums in der als Ausgangsmaterial verwendeten Milch.

9. Verfahren nach einem der vorhergehenden Ansprüche, **dadurch gekennzeichnet, dass** der Calciumgehalt der hergestellten calciumarmen Milch höchstens 0,3 Gew.-%, vorzugsweise höchstens 0,2 Gew.-% der Trockenmasse der Milch beträgt.

10. Verfahren nach einem der vorhergehenden Ansprüche, **dadurch gekennzeichnet, dass** der pH-Wert der erhaltenen calciumarmen Milch mit einer schwachen Säure auf den Wert von etwa 6,5 bis 7,5 eingestellt wird.

11. Verfahren zur Herstellung von calciumarmer Kondensmilch und Milchpulver, **dadurch gekennzeichnet, dass** als Ausgangsmaterial eine nach einem Verfahren nach einem der Ansprüche 1 bis 10 hergestellte calciumarme Milch verwendet wird.

12. Verfahren nach Anspruch 11, **dadurch gekennzeichnet, dass** das Verfahren die folgenden Schritte umfasst:
a) Herstellen von calciumarmer Milch mit dem Verfahren nach einem der Ansprüche 1 bis 10,
b) Einstellen des pH-Werts der calciumarmen Milch mit einer schwachen Säure auf den Wert von 6,5 bis 7,5,
c) Pasteurisieren der Milch,
d) Verdampfen der pasteurisierten Milch auf einen Feststoffgehalt von etwa 20 bis 55 %, um Kondensmilch zu erhalten, und
e1) Rückgewinnen der Kondensmilch, wobei calciumarme Kondensmilch erhalten wird, oder
e2) Trocknen der Kondensmilch, wodurch calciumarmes Milchpulver erhalten wird.

13. Verfahren nach einem der vorhergehenden Ansprüche, **dadurch gekennzeichnet, dass** die schwache Säure Zitronensäure ist.

14. Verfahren nach Anspruch 12, **dadurch gekennzeichnet, dass** Schritt e2 durch Sprühtrocknung durchgeführt wird.

15. Verfahren nach einem der Ansprüche 12 bis 14, **dadurch gekennzeichnet, dass** die Enzymbehandlung nach Schritt a oder e1 durchgeführt wird.

16. Verfahren nach einem vorhergehenden Anspruch, **dadurch gekennzeichnet, dass** die Transglutaminase in einer Menge von 0,1 bis 500 U/g Milchpulver oder Milchtrockenmasse zugegeben wird.

17. Verfahren nach einem der Ansprüche 11 bis 16, **dadurch gekennzeichnet, dass** der Calciumgehalt der erhaltenen Kondensmilch höchstens 0,3 Gew.-%, vorzugsweise höchstens 0,2 Gew.-% der Trockenmasse der kondensierten Milch beträgt.

18. Verfahren nach einem der Ansprüche 11 bis 16, **dadurch gekennzeichnet, dass** der Calciumgehalt des erhaltenen Milchpulvers höchstens 0,3 Gew.-%, vorzugsweise höchstens 0,2 Gew.-% der Trockenmasse des Milchpulvers beträgt.

19. Calciumarme Milch, Kondensmilch oder Milchpulver, **dadurch gekennzeichnet, dass** deren Calciumgehalt höchstens 0,3 % der Trockenmasse jeweils der Milch, Kondensmilch oder Milchpulver beträgt und dass es mit Transglutaminase-Enzym behandelt wird.

20. Calciumarme Milch, Kondensmilch oder Milchpulver nach Anspruch 19, **dadurch gekennzeichnet, dass** der pH-Wert der calciumarmen Milch oder Kondensmilch, die bei der Herstellung der calciumarmen Milch, Kondensmilch oder Milchpulver verwendeten wird, mit einer schwachen Säure auf den Wert von etwa 6,5 bis 7,5 eingestellt wird.

21. Calciumarme Milch, Kondensmilch oder Milchpulver nach Anspruch 20, **dadurch gekennzeichnet, dass** die schwache Säure Zitronensäure ist.

22. Calciumarme Milch, Kondensmilch oder Milchpulver nach einem der Ansprüche 19 bis 21, **dadurch gekennzeichnet, dass** deren Calciumgehalt höchstens 0,2% der Trockenmasse der Milch, Kondensmilch oder Milchpulver beträgt.

23. Calciumarme Milch, Kondensmilch oder Milchpulver nach einem der Ansprüche 19 bis 22, **dadurch gekennzeichnet, dass** es nach einem Verfahren nach einem der Ansprüche 1 bis 16 hergestellt wird.

24. Verwendung von calciumarmer Milch, Kondensmilch oder Milchpulver, welche einen Calciumgehalt von höchstens 0,3 Gew.-% der Trockenmasse haben, als ein Stabilisierungsmittel und/oder Texturierungsmittel in Milchzubereitungen, **dadurch gekennzeichnet, dass** die calciumarme Milch, Kondensmilch oder Milchpulver mit einem Verfahren nach einem der Ansprüche 1 bis 18 hergestellt wird, oder dass es ein Erzeugnis nach einem der Ansprüche 19 bis 22 ist.

25. Verwendung nach Anspruch 24 als Texturierungsmittel in Sauermilchprodukten, wie etwa Joghurt, Sauermilch, "Viili" oder Quark.

26. Verwendung nach Anspruch 24 als ein Stabilisierungsmittel in heißen oder beheizten Lebensmitteln wie Kaffeesahne, Kochensahne oder Creme fraiche oder Imitation Sahne.

27. Verwendung nach einem der Ansprüche 24 bis 26, **dadurch gekennzeichnet, dass** etwa 5 bis 50 Gew.-% calciumarmer Milch, etwa 1 bis 25 Gew.-% calciumarmer Kondensmilch und etwa 0,5 bis 5 Gew.-%, vorzugsweise 1 bis 3 Gew.-% calciumarmes Milchpulver für das Gewicht der Milchzubereitung verwendet wird.

## Revendications

1. Procédé pour enlever le calcium du lait pour la production de lait à faible teneur en calcium, **caractérisé en ce que** le lait est soumis à un traitement d'échange d'ions avec une résine d'échange faible en cations sous la forme d'un ion métallique univalent, et à un traitement enzymatique avec de la transglutaminase.

2. Procédé selon la revendication 1, **caractérisé en ce que** la résine d'échange de cations est sous une forme Na⁺ ou K⁺, de préférence sous une forme Na⁺.

3. Procédé selon l'une quelconque des revendications précédentes, **caractérisé en ce que** le groupe fonctionnel de la résine d'échange de cations est un groupe carboxyle.

4. Procédé selon l'une quelconque des revendications précédentes, **caractérisé en ce que** la résine d'échange de cations est une résine à base de copolymère d'acrylate / divinylbenzène.

5. Procédé selon l'une quelconque des revendications précédentes, **caractérisé en ce que** le procédé comprend la régénération de la résine en utilisant une régénération à deux phases, où dans la première phase, la résine est régénérée avec un acide et dans la seconde phase avec une base.

6. Procédé selon la revendication 5, **caractérisé en ce que** l'acide est du HCl ou du HNO₃ et la base est du NaOH ou du KOH, de préférence du NaOH.

7. Procédé selon l'une quelconque des revendications précédentes, **caractérisé en ce que** la matière de départ du procédé est du lait écrémé.

8. Procédé selon l'une quelconque des revendications précédentes, **caractérisé en ce que** le produit obtenu est du lait à faible teneur en calcium avec une teneur en calcium d'au plus 20 %, de préférence au plus 10 % et particulièrement de préférence au plus 5 % du calcium dans le lait utilisé comme matière de départ.

9. Procédé selon l'une quelconque des revendications précédentes, **caractérisé en ce que** la teneur en calcium du lait à faible teneur en calcium produit est au plus de 0,3 pour-cent en poids, de préférence au plus 0,2 pour-cent en poids de la matière sèche du lait.

10. Procédé selon l'une quelconque des revendications précédentes, **caractérisé en ce que** le pH du lait à faible teneur en calcium obtenu est ajusté avec un acide faible à la valeur d'environ 6,5 à 7,5.

11. Procédé pour la production de lait condensé et de lait en poudre à faible teneur en calcium, **caractérisé en ce qu'**un lait à faible teneur en calcium préparé par un procédé selon l'une quelconque des revendications 1 à 10 est utilisé comme matière de départ.

12. Procédé selon la revendication 11, **caractérisé par** le procédé comprenant les étapes de :
a) production de lait à faible teneur en calcium avec le procédé selon l'une quelconque des revendications 1 à 10,
b) ajustement du pH du lait à faible teneur en calcium avec un acide faible à la valeur de 6,5 à 7,5,
c) pasteurisation du lait,
d) évaporation du lait pasteurisé jusqu'à une teneur en solides d'approximativement 20 à 55 % pour obtenir du lait condensé, et
e1) récupération du lait condensé, de sorte que du lait condensé à faible teneur en calcium est obtenu, ou
e2) séchage du lait condensé, de sorte que du lait en poudre à faible teneur en calcium est obtenu.

13. Procédé selon l'une quelconque des revendications précédentes, **caractérisé en ce que** l'acide faible est de l'acide citrique.

14. Procédé selon la revendication 12, **caractérisé en ce que** l'étape e2 est effectuée par séchage par atomisation.

15. Procédé selon les revendications 12 à 14, **caractérisé en ce que** le traitement enzymatique est effectué après l'étape a ou e1.

16. Procédé selon l'une quelconque des revendications précédentes, **caractérisé en ce que** la transglutaminase est ajoutée en une quantité de 0,1 à 500 U/g de lait en poudre ou de matière sèche du lait.

17. Procédé selon l'une quelconque des revendications 11 à 16, **caractérisé en ce que** la teneur en calcium du lait condensé obtenu est au plus de 0,3 pour-cent en poids, de préférence au plus 0,2 pour-cent en poids de la matière sèche du lait condensé.

18. Procédé selon l'une quelconque des revendications 11 à 16, **caractérisé en ce que** la teneur en calcium du lait en poudre obtenu est au plus de 0,3 pour-cent en poids, de préférence au plus 0,2 pour-cent en poids de la matière sèche du lait en poudre.

19. Lait, lait condensé ou lait en poudre à faible teneur en calcium, **caractérisé en ce que** sa teneur en calcium est respectivement au plus de 0,3 % de la matière sèche du lait, du lait condensé ou du lait en poudre, et il est traité avec de l'enzyme transglutaminase.

20. Lait à faible teneur en calcium, lait condensé ou lait en poudre selon la revendication 19, **caractérisé en ce que** le pH du lait ou du lait condensé à faible teneur en calcium utilisé dans la préparation du lait, du lait condensé ou du lait en poudre à faible teneur en calcium est ajusté avec un acide faible à la valeur d'environ 6,5 à 7,5.

21. Lait, lait condensé ou lait en poudre à faible teneur en calcium selon la revendication 20, **caractérisé en ce que** l'acide faible est de l'acide citrique.

22. Lait, lait condensé ou lait en poudre à faible teneur en calcium selon l'une quelconque des revendications 19 à 21, **caractérisé en ce que** sa teneur en calcium est au plus de 0,2 % de la matière sèche du lait, lait condensé ou lait en poudre.

23. Lait, lait condensé ou lait en poudre à faible teneur en calcium selon l'une quelconque des revendications 19 à 22, **caractérisé en ce qu'**il est préparé avec un procédé selon l'une quelconque des revendications 1 à 16.

24. Utilisation de lait, lait condensé ou lait en poudre à faible teneur en calcium, qui ont une teneur en calcium d'au plus 0,3 pourcent en poids à sec, comme agent de stabilisation et/ou agent de texture dans une préparation à base de lait, **caractérisée en ce que** le lait, lait condensé ou lait en poudre à faible teneur en calcium est préparé avec un procédé selon l'une quelconque des revendications 1 à 18, ou **en ce que** c'est un produit selon l'une quelconque des revendications 19 à 22.

25. Utilisation selon la revendication 24 en tant qu'agent de texture dans des produits laitière acidifiés, comme du yaourt, du lait acidifié, du «viili» (lait fermenté scandinave) ou du lait caillé.

26. Utilisation selon la revendication 24 en tant qu'agent de stabilisation dans des produits alimentaires chauds ou chauffés, comme de la crème pour le café, de la crème à cuisson ou de la crème fraîche, ou de la crème d'imitation.

27. Utilisation selon l'une quelconque des revendications 24 à 26, **caractérisée en ce qu'**approximativement 5 à 50 pourcent de en poids de lait à faible teneur en calcium, approximativement 1 à 25 pourcent en poids de lait condensé à faible teneur en calcium et environ 0,5 à 5 pourcent en poids, de préférence 1 à 3 pourcent en poids de lait en poudre à faible teneur en calcium sont utilisés du poids de la préparation de lait.
